(19) Europäisches Patentamt
European Patent Office
Office européen des brevets

(11) **EP 3 730 998 A1**

(12) **EUROPÄISCHE PATENTANMELDUNG**

(43) Veröffentlichungstag:
**28.10.2020 Patentblatt 2020/44**

(51) Int Cl.:
*G02C 13/00* *(2006.01)*     *G01M 11/02* *(2006.01)*

(21) Anmeldenummer: **19170551.6**

(22) Anmeldetag: **23.04.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Carl Zeiss Vision International GmbH 73430 Aalen (DE)**

(72) Erfinder:
• **Ohlendorf, Arne 72072 Tübingen (DE)**
• **Leube, Alexander 72072 Tübingen (DE)**
• **Wahl, Siegfried 73072 Donzdorf (DE)**

(74) Vertreter: **Altmann Stößel Dick Patentanwälte PartG mbB Dudenstrasse 46 68167 Mannheim (DE)**

(54) **BESTIMMUNG MINDESTENS EINES OPTISCHEN PARAMETERS EINES BRILLENGLASES**

(57) Die vorliegende Erfindung betrifft ein Verfahren, eine Vorrichtung und ein Computerprogramm zur Bestimmung mindestens eines optischen Parameters eines Brillenglases (140, 140'), sowie ein Verfahren zur Herstellung des Brillenglases (140, 140') unter Verwendung des mindestens einen optischen Parameters. Das Verfahren umfasst die folgenden Schritte:
a) Aufnehmen eines Bildes unter Verwendung des Brillenglases (140, 140'); und
b) Bestimmen mindestens eines optischen Parameters des Brillenglases (140, 140') mittels Bildverarbeitung des Bildes,
wobei das Bild eine die Augen (112, 112') einschließende Augenpartie (110, 110') und/oder eine an die Augen (112, 112') angrenzende Gesichtspartie eines Nutzers des Brillenglases (140, 140') umfasst.

Insbesondere ermöglicht es die vorliegende Erfindung, mindestens einen optischen Parameter des Brillenglases (140, 140') zu bestimmen, ohne dass hierzu Spezialgeräte erforderlich sind. Die Bestimmung kann daher auch von Laien durchgeführt werden.

Fig. 3

**Beschreibung**

Gebiet der Erfindung

Die vorliegende Erfindung betrifft ein Verfahren, eine Vorrichtung und ein Computerprogramm zur Bestimmung mindestens eines optischen Parameters eines Brillenglases, sowie ein Verfahren zur Herstellung eines Brillenglases unter Verwendung des mindestens einen optischen Parameters.

Stand der Technik

Aus dem Stand der Technik sind Verfahren zur Bestimmung optischer Parameter von Brillengläsern bekannt.

Die Norm DIN EN ISO 13666:2013-10, im Folgenden auch als die "Norm" bezeichnet, Abschnitte 9-12 befasst sich mit optische Parametern von Brillengläsern, insbesondere im Hinblick auf sphärische, prismatische und astigmatische Eigenschaften der Brillengläser. Insbesondere definiert die Norm, 9.7.1 und 9.7.2 einen "bildseitigen Scheitelbrechwert" als Kehrwert einer paraxialen Schnittweite eines bildseitigen Brennpunktes sowie einen "objektseitigen Scheitelbrechwert" als den Kehrwert der paraxialen Schnittweite eines objektseitigen Brennpunktes, jeweils gemessen in Metern, wobei üblicherweise der "bildseitige Scheitelbrechwert" auch einfach als "Scheitelbrechwert" bezeichnet wird. Im Folgenden bezeichnet daher der Begriff des "Scheitelbrechwertes", sofern im Einzelnen nicht ausdrücklich erwähnt, den "bildseitigen Scheitelbrechwert". Für weitere Einzelheiten in Bezug auf den Scheitelbrechwert wird auf die Norm verwiesen.

Weiterhin stellt die Norm, 11.2 einen so genannten "sphärischen Brechwert" vor, der als Wert für den Scheitelbrechwert eines Brillenglases mit sphärischer Wirkung oder für den jeweiligen Scheitelbrechwert in einem von zwei Hauptschnitten des Brillenglases mit astigmatischer Wirkung festgelegt ist. Das Brillenglas mit astigmatischer Wirkung gemäß der Norm, 12 vereinigt ein paraxiales, paralleles Lichtbündel in zwei getrennten, senkrecht zueinander stehenden Brennlinien und weist daher nur in den beiden Hauptschnitten einen Scheitelbrechwert auf. Brillengläser mit astigmatischer Wirkung können hierbei auch als zylindrische Brillengläser, sphärozylindrische Brillengläser, torische Brillengläser oder sphärotorische Brillengläser bezeichnet werden. Die "astigmatische Wirkung" ist gemäß der Norm durch Zylinderstärke und Achslage festgelegt. Hierbei stellt die "Zylinderstärke" gemäß der Norm, 12.5 den Betrag einer "astigmatischen Differenz" dar, welche die Differenz zwischen den Scheitelbrechwerten in den beiden Hauptschnitten angibt. Die "Achslage" bezeichnet gemäß der Norm, 12.6 eine Richtung des Hauptschnittes, dessen Scheitelbrechwert als Referenzwert herangezogen wird. Schließlich wird nach der Norm, 12.8 die "Stärke" des Brillenglases mit astigmatischer Wirkung mittels drei Werten, umfassend die Scheitelbrechwerte jedes der beiden Hauptschnitte und die Zylinderstärke, angegeben. Alternativ kann ein arithmetisches Mittel der drei Werte als "sphärisches Äquivalent" angegeben werden, das definiert ist als sphärische Fernkorrektion ± ½ astigmatische Korrektion, wobei die "astigmatische Korrektion" durch Zylinderstärke und Achslage festgelegt ist.

Zur Bestimmung der Scheitelbrechwerte und der prismatischen Wirkungen von Brillengläsern wird üblicherweise ein spezielles "Scheitelbrechwert-Messgerät" gemäß der Norm, 8.5 eingesetzt. Nachteilig ist hieran, dass diese Messgeräte von einem Spezialisten, insbesondere einem Augenoptiker, welcher dazu ausgebildet ist, bedient werden müssen und dass diese Messgeräte ortsfest angeordnet sind. Derartige Messgeräte sind in der Regel darüber hinaus dazu eingerichtet, um Trageparameter der Brille zu ermitteln, wozu insbesondere ein Hornhautscheitelabstand, ein Pupillendurchmesser, ein Pupillenabstand und ein Vorneigungswinkel des Brillenglases gehören. Der "Hornhautscheitelabstand" ist gemäß der Norm, 5.27 festgelegt als Abstand des Hornhautscheitels (Cornea apex) des Auges eines Nutzers zur Rückfläche des Brillenglases, gemessen senkrecht zu einer Ebene der Brillenfassung (Fassungsebene). Die "Pupille" bezeichnet eine in jedem Auge des Nutzers vorhandene Eintrittsöffnung, durch welche Strahlung in Form von Licht in das Innere des Auges eintreten kann, deren Durchmesser und Abstände aus Aufnahmen des Nutzers, ermittelt werden kann. Gemäß der Norm, 5.18, ist der "Vorneigungswinkel" oder der "pantoskopische Winkel" festgelegt als Winkel in einer Vertikalebene zwischen einer Normalen zur Vorderfläche eines Brillenglases in dessen Mittelpunkt nach Kastensystem und einer horizontalen Fixierlinie des Auges.

WO 2016/181310 A1 offenbart Vorrichtungen, Verfahren und Computerprogramme zur Bestimmung mindestens eines optischen Parameters von Brillengläsern. Hierzu wird mindestens ein Bild eines Objekts, das mindestens eine bekannte Dimension aufweist und das durch das Brillenglas aufgenommen wurde, einem Bildverarbeitungsverfahren unterzogen, um den mindestens einen optischen Parameter des Brillenglases zu ermitteln. Zu den optischen Parametern der Brillengläser gehören insbesondere der sphärische Brechwert, die Zylinderstärke und die Achslage des Brillenglases. Mittels der so bestimmten optischen Parameter kann sich der Brillenträger ein Zweitexemplar seiner Brillengläser und/oder Ersatzgläser anfertigen lassen.

Aufgabe der Erfindung

Insbesondere ausgehend von der Offenbarung der WO 2016/181310 A1 besteht die Aufgabe der vorliegenden Erfindung darin, ein Verfahren, eine Vorrichtung und ein Computerprogramm zur Bestimmung mindestens eines optischen Parameters eines Brillenglases, sowie ein Verfahren zur Herstellung des Brillenglases unter Verwendung des mindestens einen optischen Parameters bereitzustellen, welche die aufgeführten Nachteile und Einschränkungen des Standes der Technik zumindest teilweise überwinden.

Insbesondere sollen es das vorliegende Verfahren, Vorrichtung und Computerprogramm ermöglichen, mindestens einen optischen Parameter eines Brillenglases, vorzugsweise einen Scheitelbrechwert in einem Brillenglas mit sphärischer Wirkung oder die Zylinderstärke und den jeweiligen Scheitelbrechwert in einem von zwei Hauptschnitten in einem Brillenglas mit astigmatischer Wirkung, zu bestimmen, ohne dass hierzu Spezialgeräte erforderlich sind und daher die Bestimmung auch von Laien durchgeführt werden kann.

Offenbarung der Erfindung

Diese Aufgabe wird gelöst durch ein Verfahren, eine Vorrichtung und ein Computerprogramm zur Bestimmung mindestens eines optischen Parameters eines Brillenglases, sowie ein Verfahren zur Herstellung eines Brillenglases unter Verwendung des mindestens einen optischen Parameters mit den Merkmalen der unabhängigen Patentansprüche. Bevorzugte Ausgestaltungen, welche einzeln oder in Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nichtausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist, d.h. auf eine Situation, in welcher A ausschließlich aus B besteht, als auch auf die Situation, in welcher, zusätzlich zu B, ein oder mehrere weitere Elemente in A vorhanden sind, beispielsweise Element C, Elemente C und D oder sogar weitere Elemente.

In einem ersten Aspekt betrifft die vorliegende Erfindung ein Verfahren zur Bestimmung mindestens eines optischen Parameters eines Brillenglases. Das Verfahren umfasst die folgenden Schritte a) und b), vorzugsweise in der angegebenen Reihenfolge, wobei auch eine teilweise zeitgleiche Ausführung der Verfahrensschritte möglich ist. Weiterhin können einzelne oder alle Schritte des Verfahrens wiederholt ausgeführt werden. Das Verfahren kann, zusätzlich zu den genannten Verfahrensschritten, auch weitere Verfahrensschritte umfassen.

Das Verfahren zur Bestimmung mindestens eines optischen Parameters eines Brillenglases umfasst die folgenden Schritte:

a) Aufnehmen eines Bildes unter Verwendung eines Brillenglases; und

b) Bestimmen mindestens eines optischen Parameters des Brillenglases mittels Bildverarbeitung des Bildes,

wobei das Bild eine die Augen einschließende Augenpartie und/oder eine an die Augen angrenzende Gesichtspartie eines Nutzers des Brillenglases umfasst.

Unter einem "Brillenglas" wird gemäß der Norm, 8.1.1 und 8.1.2 eine optische Linse verstanden, welche zur Korrektur von Fehlsichtigkeiten des Auges dient, wobei die optische Linse vor dem Auge des Nutzers, aber nicht in Kontakt mit dem Auge getragen wird. Der Begriff der "Brille" bezeichnet im Rahmen der vorliegenden Erfindung ein beliebiges Element, welches zwei einzelne Brillengläser und eine Brillenfassung umfasst, wobei das Brillenglas zur Einbringung in eine Brillenfassung vorgesehen ist, welche von einem Nutzer der Brille ausgewählt wird. Anstelle des hier verwendeten Begriffs des "Nutzers" kann gleichbedeutend auch einer der Begriffe "Benutzer", "Brillenträger", "Subjekt" oder "Proband" verwendet werden.

Das hier vorgeschlagene Verfahren zur Bestimmung mindestens eines optischen Parameters eines Brillenglases eignet sich zu einer Vermessung der optischen Parameter eines Brillenglases. Der hierbei bestimmte Wert kann zudem für die Auswahl und Herstellung einer weiteren Brille, die z.B. als Zweitbrille oder als Ersatzbrille dienen kann, eingesetzt werden. In einer besonderen Ausgestaltung können mittels der vorliegenden Erfindung gewonnene Werte für die Korrektur der Brillengläser dazu benutzt werden, um, insbesondere bei einer virtuelle Betrachtung des Nutzers mit aufgesetzter Brille, das auch als so genanntes "Virtual Try on" bezeichnet wird, die beobachtbare Verkleinerung oder Vergrößerung durch die Brillengläser derart mit einzubeziehen, dass eine Darstellung des Nutzers mit Brille noch realistischer erscheint.

Der mit dem vorliegenden Verfahren ermittelte mindestens eine optische Parameter kann insbesondere dazu eingesetzt werden, um Werte für eine sphärozylindrische Linse zu ermitteln, welche als Brillenglas benutzt werden kann, um Refraktionsfehler des Auges mittels Korrektion derart zu kompensieren, dass sich eine möglichst optimale Bildqualität für den Nutzer erzielen lässt. Der Begriff des "optischen Parameters" bezeichnet hierbei einen Wert für eine Eigenschaft des Brillenglases, der sich insbesondere bei der Herstellung des Brillenglases aus dem Glasrohling einstellen lässt, bevorzugt um die angestrebte Korrektion zu erzielen. Zu einer Beschreibung der sphärozylindrischen Linse eignen sich verschiedene Darstellungsweisen. Die Norm legt in Abschnitt 11.2 hierfür einen "sphärischen Brechwert" fest, der als Wert für einen Scheitelbrechwert eines Brillenglases mit sphärischer Wirkung oder für den jeweiligen Scheitelbrechwert in einem von zwei Hauptschnitten des Brillenglases mit astigmatischer Wirkung definiert ist. Nach der Norm, 9.7.1-9.7.2 ist der "Scheitelbrechwert" als Kehrwert einer paraxialen Schnittweite eines bildseitigen Brennpunktes, jeweils gemessen in Metern, festgelegt. Das sphärozylindrische Brillenglas mit astigmatischer Wirkung vereinigt gemäß der Norm, 12, ein paraxiales, paralleles Lichtbündel in zwei getrennten, zueinander senkrecht stehenden Brennlinien, und besitzt daher nur in den beiden Hauptschnitten einen Scheitelbrechwert. Die "astigmatische Wirkung" ist hierbei durch Zylinderstärke und Achslage festgelegt. Hierbei stellt die "Zylinderstärke" gemäß der Norm, 12.5 den Betrag einer "astigmatischen Differenz" dar, welche den Unterschied zwischen den Scheitelbrechwerten in den beiden Hauptschnitten angibt. Die "Achslage" bezeichnet gemäß der Norm, 12.6 eine Richtung des Hauptschnittes, dessen Scheitelbrechwert als Referenzwert herangezogen wird. Schließlich wird nach der Norm, 12.8 die "Stärke" des Brillenglases mit astigmatischer Wirkung mittels drei Werten, umfassend die Scheitelbrechwerte jedes der beiden Hauptschnitte und die Zylinderstärke, angegeben.

Nach L. N. Thibos, W. Wheeler und D. Horner (1997), Power Vectors: An Application of Fourier Analysis to the Description and Statistical Analysis of Refractive Error, Optometry and Vision Science 74 (6), S. 367-375, eignet sich zur Beschreibung einer beliebigen sphärozylindrischen Linse die Angabe eines Sehstärkevektors, welcher durch genau einen Punkt in einem dreidimensionalen dioptrischen Raum beschrieben werden kann, wobei der dreidimensionale dioptrische Raum durch Koordinaten aufgespannt werden kann, welche der Sehstärke und der Zylinderstärke entsprechen bzw. damit korreliert sind.

Gemäß Schritt a) des vorliegenden Verfahrens erfolgt ein Aufnehmen eines Bildes unter Verwendung eines Brillenglases. Der Begriff des "Bildes" betrifft eine zwei-dimensionale Darstellung eines Gegenstandes, die auch als "Abbildung" bezeichnet wird, mittels einer optischen Aufnahmeeinheit, im Folgenden als "Kamera" bezeichnet. Hierzu kann eine Aufnahme eines einzelnen Bildes oder mehrerer Bilder, insbesondere einer Videosequenz, erfolgen. Hierbei erfolgt die Aufnahme des Bildes mittels der Kamera derart, dass das Brillenglas so zwischen der Kamera und dem abzubildenden Gegenstand so angeordnet wird, dass ein Verlauf eines von der Kamera ausgehenden oder auf die Kamera auftreffenden Lichtstrahls, der auch als "Strahlengang" bezeichnet wird, durch das Brillenglas hindurch geführt wird.

Erfindungsgemäß erfolgt das Aufnehmen des Bildes gemäß Schritt a) derart, dass der auf dem Bild dargestellte Gegenstand zumindest die Augen des Nutzers, eine an die Augen angrenzende Gesichtspartie des Nutzers oder beide Gegenstände umfasst, wobei das Brillenglas dadurch zwischen der Kamera und dem abzubildenden Gegenstand angeordnet werden kann, dass der Nutzer das Brillenglas vorzugsweise bestimmungsgemäß trägt. Ein "bestimmungsgemäßes Tragen des Brillenglases" durch den Nutzer bedeutet, dass der Nutzer das Brillenglas derart verwendet, dass es seine Funktion gemäß der Norm, 8.1.1 und 8.1.2 zur Korrektion von Fehlsichtigkeiten des Auges des Nutzers ausüben kann. Hierzu kann der Nutzer insbesondere eine das Brillenglas umfassende Brille derart an seinem Gesicht anordnen, dass das Brillenglas die vorgesehene Funktion ausüben kann.

In einer besonders bevorzugten Ausgestaltung der vorliegenden Erfindung kann zusätzlich zu dem mindestens einem Bild, auf dem der Nutzer bestimmungsgemäß die das Brillenglas umfassende Brille trägt, mindestens ein weiteres Bild des Nutzers als Vergleichsbild aufgenommen werden, auf welchem der Nutzer die Brille nicht trägt, wobei die übrigen bei der Aufnahme des Bildes verwendeten Parameter möglichst unverändert sein sollen. Das Bild des Nutzers ohne Brille kann, wie unten näher erläutert, für die gemäß Schritt b) erfolgende Bestimmung des mindestens einen optischen Parameters des Brillenglases im Rahmen der Bildverarbeitung somit als Vergleichsbild herangezogen werden kann. In einer alternativen oder zusätzlichen Ausgestaltung kann auf ein Vergleichsbild verzichtet werden, insbesondere dann, wenn auf bereits vorhandene Bilder desselben Gegenstands ohne Brille oder auf bereits vorhandene geometrische Abmessungen der Augen des Nutzers und/oder der an die Augen angrenzenden Gesichtspartie des Nutzers zurückgegriffen werden oder entsprechende Daten mittels Bildverarbeitung zumindest näherungsweise ermittelt werden kann.

In einer besonders bevorzugten Ausgestaltung der vorliegenden Erfindung kann das gemäß Schritt a) aufgenommene Bild somit zumindest ein Auge des Nutzers darstellen, wobei das Auge des Nutzers, wie erwähnt, unter bestimmungsgemäßen Tragen des Brillenglases durch den Nutzer aufgenommen wird. In einer alternativen oder zusätzlichen Ausgestaltung kann das Bild der an die Augen angrenzenden Gesichtspartie des Nutzers zumindest eine seitliche Kopfform des Nutzers, insbesondere einen Bereich um die betreffende Schläfe (Tempus) des Nutzers, die seitlich in Bezug auf die Lage der Augen des Nutzers angeordnet ist, umfassen. Auch hier wird diese Gesichtspartie des Nutzers, wie bereits erwähnt, unter bestimmungsgemäßen Tragen des Brillenglases durch den Nutzer aufgenommen.

Wie weiterhin bereits erwähnt, dient die Kamera als optische Aufnahmeeinheit zur Aufnahme eines oder mehrerer Bilder der Augen und/oder einer an die Augen angrenzenden Gesichtspartie des Nutzers, während der Nutzer eine das Brillenglas umfassende Brille trägt. Die Kamera kann hierbei vorzugsweise von einen mobilen Kommunikationsgerät umfasst sein. Der Begriff des "mobilen Kommunikationsgeräts" umfasst hierbei insbesondere ein Mobiltelefon (Handy), ein Smartphone oder ein Tablet. Andere Arten von mobilen Kommunikationsgeräten sind jedoch denkbar. Andere Arten von Kameras sind jedoch möglich. Insbesondere kann es sich hierbei um eine Rückkamera oder bevorzugt um eine Frontkamera des mobilen Kommunikationsgeräts handeln. Auf diese Weise kann das gewünschte Bild der Augen und/oder der an die Augen angrenzenden Gesichtspartie des Nutzers mittels der Kamera in vorteilhafter Weise an jedem beliebigen Ort aufgenommen werden.

In einer besonderen Ausgestaltung kann die Kamera eine Sensitivität im sichtbaren Spektralbereich, d.h. gemäß Norm ISO 20473:2007 bei einer Wellenlänge von 380 nm bis 780 nm aufweisen, insbesondere um Aufnahmen bei Tageslicht und/oder bei künstlicher Beleuchtung, beispielsweise in einem beleuchteten Bereich eines Zimmers, vornehmen zu können. Alternativ oder zusätzlich kann die Kamera eine Sensitivität im infraroten Spektralbereich, d.h. bei einer Wellenlänge von 780 nm bis 1 mm, bevorzugt von 780 nm bis 3 $\mu$m, insbesondere von 780 nm bis 1,4 $\mu$m (nach der Norm, Abschnitt 4.4, auch als "IR-A" bezeichnet), aufweisen. Um eine Infrarotstrahlung bereitzustellen, kann hierfür eine Lichtquelle vorgesehen sein, welche im infraroten Spektralbereich abstrahlt, insbesondere mit einer Wellenlänge, für welche die Kamera eine ausreichende Sensitivität aufweist. Die Lichtquelle kann vorzugsweise ausgewählt sein aus einer Mikroglühlampe oder einem IR-Emitter auf Festkörperbasis.

Gemäß Schritt b) erfolgt eine Bestimmung des mindestens einen optischen Parameters des Brillenglases mittels Bildverarbeitung des mindestens einen Bildes, das während Schritt a) aufgenommen wurde. Aus dem von der Kamera aufgenommenen Bild können mittels Bildverarbeitung, bevorzugt in einer dafür eingerichteten Auswerteeinheit, der gewünschte mindestens eine optische Parameter des Brillenglases bestimmt werden. Wie bereits erwähnt, bezeichnet der Begriff des "Scheitelbrechwerts" gemäß der Norm, 9.7.1-9.7.2 den Kehrwert der paraxialen Schnittweite des bildseitigen Brennpunktes. Ein sphärozylindrisches Brillenglas mit astigmatischer Wirkung besitzt in beiden Hauptschnitten einen Scheitelbrechwert, wobei die astigmatische Wirkung durch Zylinderstärke und Achslage festgelegt ist.

Wie weiterhin bereits erwähnt, kann in einer besonders bevorzugten Ausgestaltung das gemäß Schritt a) aufgenommene Bild zumindest eine ein Auge des Nutzers umfassende Augenpartie des Nutzers darstellen, aus der sich mittels Bildverarbeitung unter Ermittlung von geometrischen Abmessungen des Auges der mindestens eine optischen Parameter des Brillenglases bestimmen lässt. Der Begriff "geometrische Abmessungen des Auges" kann hierbei jede Art einer Abmessung in Bezug auf jedes der beiden Augen des Nutzers umfassen. Hierzu gehören insbesondere Abmessungen im Hinblick auf die Pupille des Nutzers, insbesondere eine Lage und/oder ein Durchmesser der Pupille und/oder der die Pupille umgebende Iris. Wie oben bereits definiert, bezeichnet die "Pupille" eine in jedem Auge des Nutzers vorhandene Eintrittsöffnung, durch welche Licht in das Innere des Auges eintreten kann. In umgekehrter Richtung kann die Pupille als Austrittsöffnung betrachtet werden, durch welche eine Blickrichtung des Nutzers aus dem Auge auf die Umgebung festgelegt werden kann.

In einer besonders bevorzugten Ausgestaltung der vorliegenden Erfindung kann ein gemeinsamer Durchmesser von Pupille und Iris als bevorzugte geometrische Abmessung des Auges des Nutzers verwendet werden. Vorzugsweise kann eine Bestimmung dieses Durchmessers mittels einer Ermittlung eines Weiß-zu-weiß Abstandes im Auge des Nutzers erfolgen. Der "Weiß-zu-weiß Abstand" bezeichnet hierbei den gemeinsamen Durchmesser eines von der Hornhaut (Cornea) geschützten transparenten Bereichs des jeweiligen Auges, der die Pupille und die Iris des Auges umfasst, die von einem so genannten "weißen Bereich" des Auges umgeben werden. Für weitere Einzelheiten wird auf die unten stehenden Ausführungsbeispiele verwiesen. Weitere Arten der Bestimmung des Durchmessers von Pupille und/oder Iris sind jedoch möglich. In einer alternativen oder zusätzlichen Ausgestaltung können ein horizontaler Abstand zwischen einem rechten Augenwinkel und einem linkem Augenwinkel des Auges und/oder ein vertikaler Abstand zwischen einem Oberlid und einem Unterlid des Auges als geometrische Abmessung des Auges des Nutzers angegeben werden. Weitere geometrische Abmessungen sind denkbar.

In einer besonders bevorzugten Ausgestaltung der vorliegenden Erfindung kann zur Bestimmung von Absolutwerten für die geometrischen Abmessungen des Auges des Nutzers mittels Bildverarbeitung darüber hinaus ein Abstand zwischen dem betreffenden Auge und der Kamera einbezogen werden. In einer Ausgestaltung können hierbei für eine Angabe des Abstandes des Auges des Nutzers von der Kamera bekannte oder geschätzte Werte verwendet werden. In einer bevorzugten Ausgestaltung kann eine messtechnische Erfassung des Abstandes zwischen dem Auge des Nutzers und der Kamera erfolgen. Hierzu kann die Auswerteeinheit weiterhin über eine Einrichtung zur Erfassung des Abstands des Auges des Nutzers von der Kamera verfügen. Hiermit kann durch Bildverarbeitung des Bildes des Auges des Nutzers, welches bevorzugt von der Kamera gemäß Schritt a) aufgenommen wurde, ein auch als "Pupillendistanz" bezeichneter Abstand zwischen der Kamera und dem Auge des Nutzers ermittelt werden. Hierzu lassen sich bekannte Algorithmen einsetzen, insbesondere Pixelmatching, maschinelles Lernen, neuronale Netzwerke oder eine Anpassung von Parametern an eine vorgegebene Funktion (Fit). In einer weiteren Ausgestaltung können mindestens zwei Kameras vorgesehen sein, die gemeinsam in Form einer Stereokamera angeordnet sind und daher zur Erfassung des Abstands des Auges des Nutzers von dem Bildschirm eingerichtet sind. Die Auswertung kann hierbei durch Triangulation bevorzugt über eine bekannte Pixelanzahl der Kamera bei Detektion eines bekannten Gegenstandes oder Bildinhaltes erfolgen. Alternativ oder zusätzlich kann das die Kamera umfassende mobile Kommunikationsgerät über einen gesonderten Entfernungsmesser verfügen, welcher zur Bestimmung der Pupillendistanz zwischen der Kamera und dem Auge des Nutzers eingerichtet ist.

Zusätzlich zu den geometrischen Abmessungen des Auges des Nutzers, die aus dem mindestens einen Bild, auf dem der Nutzer bestimmungsgemäß die das Brillenglas umfassende Brille trägt, ermittelt wurden, können Vergleichsdaten zu den geometrischen Abmessungen des Auges des Nutzers ohne Brille vorliegen. Wie bereits erwähnt, kann hierzu mindestens ein weiteres Bild des Nutzers als Vergleichsbild aufgenommen werden, auf dem der Nutzer die Brille nicht trägt, wobei die übrigen Parameter der Aufnahme des Bildes möglichst unverändert sein sollen. Alternativ oder zusätzlich kann auf bereits vorhandene Bilder oder auf bereits bekannte geometrische Abmessungen der Augen des Nutzers zurückgegriffen werden oder entsprechende Daten können mittels der Bildverarbeitung zumindest näherungsweise ermittelt werden. Aus einem Vergleich der geometrischen Abmessung der Augen des Nutzers, die aufgenommen wurden, während der Nutzer die das Brillenglas umfassende Brille trägt, und der Vergleichsdaten zu den geometrischen Abmessungen des Auges des Nutzers ohne Brille kann, insbesondere unter Verwendung der Auswerteeinheit, eine Änderung der geometrischen Abmessungen des Auges des Nutzers ermittelt werden, welche erfindungsgemäß dazu eingesetzt werden kann, auf ein sphärisches Äquivalent der mittels des Brillenglases erfolgten Fernkorrektion des Auges des Nutzers zu schließen.

Welche Änderung der geometrischen Abmessungen des Auges des Nutzers beobachtbar ist, hängt zunächst davon ab, welche dioptrische Wirkung das eingesetzte Brillenglas aufweist. Ein Brillenglas mit negativer dioptrischer Wirkung, das auch als "Minusglas" bezeichnet wird, und das sich daher zur Korrektion einer Kurzsichtigkeit (Myopie) des Nutzers einsetzen lässt, weist - im Vergleich zu einer Stützscheibe - eine erhöhe Dicke am Glasrand auf, während die Dicke in der Glasmitte verringert ist. Demgegenüber weist ein Brillenglas mit positiver dioptrischer Wirkung, das auch als "Plusglas" bezeichnet wird, und das sich daher zur Korrektion einer Weitsichtigkeit (Hyperopie) des Nutzers einsetzen lässt, eine - im Vergleich zu der Stützscheibe - verringerte Dicke am Glasrand auf, während die Dicke in der Glasmitte erhöht ist. Unter den Begriffen "Stützscheibe" oder "Demoscheibe" wird gemäß der Norm ISO 8624:2011 ein beliebiges Element aus einem leicht gewölbten, optisch transparenten Material ohne dioptrische Wirkung verstanden, welches dazu eingerichtet ist, um, insbesondere zu Demonstrationszwecken, als Vorlage für die Kontur eines Brillenglases zu dienen. Basierend auf der dioptrischen Wirkung und unter Berücksichtigung des Vorzeichens ihres Scheitelbrechwertes bewirkt das Brillenglas bei einem Blick von vorn durch das jeweilige Brillenglas hindurch auf das betreffende Auge des Nutzers, dass ein durch das Brillenglas sichtbarer Bereich der Augenpartie des Nutzers verändert dargestellt wird. Insbesondere tritt bei einem Minusglas eine Verkleinerung und bei einem Plusglas eine Vergrößerung der durch das Brillenglas sichtbaren Bereich der Augenpartie des Nutzers auf.

Gleichung (1) gibt wie folgt eine Abschätzung für einen Absolutwert einer beobachtbaren Veränderung $V_E$ des sichtbaren Bereichs der Augenpartie des Nutzers von einer Größe eines Scheitelbrechwerts S' des Brillenglases an:

$$V_E = \frac{1}{1-\frac{d}{n}D_1} \cdot \frac{1}{1-((e+e')S')}, \qquad (1)$$

wobei für $d$ = 0,0005 m bei Vorliegen eines Minusglases und $d$ = 0,001 m bei Vorliegen eines Plusglases, eine Brechzahl $n$ = 1,5 oder 1,52 oder 1,6, $e$ = 0,012 m und $e'$ = 0,013348 m verwendet werden. $d$ ist hierbei die Dicke eines Brillenglases, $e$ der Hornhautscheitelabstand (HSA) und $e'$ die Summe aus dem HSA und einem Abstand des Hornhautscheitels zum Augendrehpunkt. $D_1$ ist der Brechwert der vorderen Linsenfläche, kann aber für kleine Werte einfach gleich dem Scheitelbrechwert S' bei planaren Brillengläsern (Planogläsern) gesetzt werden.

Die beobachtbare Veränderung $V_E$ des sichtbaren Bereichs der Augenpartie des Nutzers kann somit eine Veränderung mindestens eine der geometrischen Abmessungen, bevorzugt des oben definierten Weiß-zuweiß Abstandes, aber auch des Abstandes der Augenwinkel oder der Augenlider, bewirken, die sich auf einfache Weise messtechnisch erfassen lässt. Gemäß Gleichung (1) ist die beobachtbare Veränderung $V_E$ des sichtbaren Bereichs der Augenpartie des Nutzers nicht nur abhängig vom Vorzeichen, sondern auch von der Größe des Scheitelbrechwerts S'. Aus der Ermittlung der beobachtbaren Veränderung $V_E$ des sichtbaren Bereichs der Augenpartie des Nutzers kann somit auf Vorzeichen und Größe des Scheitelbrechwerts S' des jeweiligen Brillenglases, bei Vorliegen einer bekannten Kalibrierung auf das Vorzeichen und den Absolutwert des Scheitelbrechwerts S' des jeweiligen Brillenglases, geschlossen werden.

In einer weiteren besonders bevorzugten Ausgestaltung kann, wie ebenfalls bereits erwähnt, das Bild der an die Augen angrenzenden Gesichtspartie des Nutzers zumindest die seitliche Kopfform des Nutzers umfassen. In dieser Ausführung kann, insbesondere unter Verwendung der Auswerteeinheit, auf ein sphärisches Äquivalent der Fernkorrektion des Auges des Nutzers geschlossen werden, indem eine Änderung der seitlichen Kopfform des Nutzers berücksichtigt wird. Welche beobachtbare Änderung der seitlichen Kopfform des Nutzers auftritt, hängt auch hier davon ab, welche dioptrische Wirkung das eingesetzte Brillenglas aufweist. Bei einem Minusglas zeigt die beobachtbare Änderung bedingt durch eine Verzeichnung einen konkaven seitlichen Versatz der seitlichen Kopfform, welcher in Richtung des betreffenden Auges hin ausgerichtet ist. Demgegenüber tritt bei der Verwendung eines Plusglases eine beobachtbare Änderung in Form eines konvexen seitlichen Versatzes der seitlichen Kopfform auf, nach außen hin weg von dem betreffenden Auge ausgerichtet ist. Für einen möglichst genauen Nachweis der Änderung der seitlichen Kopfform können auch hier die oben genannten Algorithmen, insbesondere Pixelmatching, maschinelles Lernen, neuronale Netzwerke oder eine Anpassung von Parametern an eine vorgegebene Funktion (Fit), eingesetzt werden. Die beobachtbare Änderung der seitlichen Kopfform hängt jedoch auch hier nicht nur von dem Vorzeichen, sondern auch von der Größe des Scheitelbrechwerts S' ab. Aus der Ermittlung der beobachtbaren Änderung der seitlichen Kopfform kann erfindungsgemäß somit ebenfalls auf Vorzeichen und Größe des Scheitelbrechwerts S' des jeweiligen Brillenglases, bei Vorliegen einer bekannten Kalibrierung auf das Vorzeichen und den Absolutwert des Scheitelbrechwerts S' des jeweiligen Brillenglases, geschlossen werden.

In einer besonderen Ausgestaltung kann, insbesondere zur Bestimmung der optometrischen Parameter Sphäre, Zylinder und Achse, eine algorithmische Auswertung unter Einsatz von künstlicher Intelligenz, maschinellem Lernen und/oder eines Netzwerks, bevorzugt eines neuronalen Netzwerks erfolgen. In einer besonders bevorzugten Ausgestaltung kann im Fall, dass Daten über einen Einfluss der sphärozylindrischen Korrektion auf meridionale Unterschiede der Vergrößerung und/oder der Verkleinerung vorliegen, bereits aus einem einzigen Bild auf die optometrischen Parameter Sphäre, Zylinder und Achse geschlossen werden.

In einer besonderen Ausgestaltung kann darüber hinaus, insbesondere zur Bestimmung der optometrischen Parameter Sphäre, Zylinder und Achse für die Fernkorrektion eine Oberflächenform der Hornhaut (Cornea) des Auges mit der Kamera aufgenommen werden, wobei vorzugsweise eine erste Aufnahme ohne und eine zweite Aufnahme unter Projektion einer beliebigen, jedoch bekannten Streifenstruktur erfolgen kann. Basierend auf einer Ermittlung der Oberflächenform der Hornhaut kann auf fachmännisch bekannte Weise der astigmatische Anteil der Korrektion sowie der Achse bestimmt werden.

In einem weiteren Aspekt betrifft die vorliegende Erfindung ein Computerprogramm zur Bestimmung mindestens eines optischen Parameters eines Brillenglases, wobei das Computerprogramm dazu eingerichtet ist, die Bestimmung des mindestens eines optischen Parameters des Brillenglases gemäß dem hierin beschriebenen Verfahren zur Bestimmung mindestens eines optischen Parameters eines Brillenglases durchzuführen.

In einem weiteren Aspekt betrifft die vorliegende Erfindung ein Verfahren zur Herstellung eines Brillenglases, wobei die Herstellung des Brillenglases durch Bearbeitung eines Brillenglasrohlings erfolgt, wobei der Brillenglasrohling anhand von Zentrierdaten bearbeitet wird, wobei eine Festlegung der Zentrierdaten gemäß dem hierin beschriebenen Verfahren zur Bestimmung mindestens eines optischen Parameters eines Brillenglases erfolgt.

In einem weiteren Aspekt betrifft die vorliegende Erfindung eine Vorrichtung zur Bestimmung mindestens eines optischen Parameters eines Brillenglases. Erfindungsgemäß umfasst die Vorrichtung

- eine Kamera, die zur Aufnahme eines Bildes unter Verwendung eines Brillenglases eingerichtet ist; und
- eine Auswerteeinheit, die zur Bestimmung mindestens eines optischen Parameters des Brillenglases mittels Bildverarbeitung des Bildes eingerichtet ist,

wobei die Kamera dazu eingerichtet ist, die Aufnahme des Bildes derart vorzunehmen, dass das Bild eine die Augen einschließende Augenpartie und/oder eine an die Augen angrenzende Gesichtspartie eines Nutzers des Brillenglases umfasst.

In einer besonders bevorzugten Ausgestaltung kann die Auswerteeinheit weiterhin über eine Einrichtung zur Erfassung eines Abstands des Auges des Nutzers von dem Bildschirm oder der Kamera verfügen. Hierzu kann durch Bildverarbeitung ein Bild, welche von der Kamera insbesondere von der Augenpartie des Nutzers aufgenommen wurde, aus einer Bestimmung einer Pupillendistanz zwischen der Kamera und dem Auge des Nutzers eine Ermittlung des Durchmessers von Pupille und/oder Iris auszuführen. In einer bevorzugten Ausgestaltung können mindestens zwei Kameras vorgesehen sein, die gemeinsam in Form einer Stereokamera angeordnet sind und daher zur Erfassung des Abstands des Auges des Nutzers von dem Bildschirm eingerichtet sind. Alternativ oder zusätzlich kann die Vorrichtung einen Entfernungsmesser aufweisen, der zur Bestimmung der Pupillendistanz zwischen der Kamera und dem Auge des Nutzers eingerichtet ist.

Für Definitionen und optionale Ausgestaltungen des Computerprogramms und der Vorrichtung zur Bestimmung mindestens eines optischen Parameters eines Brillenglases sowie des Verfahrens zur Herstellung eines Brillenglases wird auf die oben oder unten stehende Beschreibung des Verfahrens zur Bestimmung mindestens eines optischen Parameters eines Brillenglases verwiesen.

Die erfindungsgemäße Vorrichtung und die vorliegenden Verfahren weisen gegenüber herkömmlichen Vorrichtungen und Verfahren zahlreiche Vorteile auf.

Zusammenfassend sind im Rahmen der vorliegenden Erfindung folgende Ausführungsformen besonders bevorzugt:

Ausführungsform 1. Verfahren zur Bestimmung mindestens eines optischen Parameters eines Brillenglases, wobei das Verfahren folgende Schritte umfasst:

a) Aufnehmen eines Bildes unter Verwendung eines Brillenglases; und
b) Ermitteln mindestens eines optischen Parameters des Brillenglases mittels Bildverarbeitung des Bildes,

wobei das Bild eine die Augen einschließende Augenpartie und/oder eine an die Augen angrenzende Gesichtspartie eines Nutzers des Brillenglases umfasst.

Ausführungsform 2. Verfahren nach der vorangehenden Ausführungsform, wobei ein Scheitelbrechwert als der optische Parameter ermittelt wird.

Ausführungsform 3. Verfahren nach der vorangehenden Ausführungsform, wobei der Scheitelbrechwert ausgewählt wird aus: dem Scheitelbrechwert des Brillenglases mit sphärischer Wirkung oder dem jeweiligen Scheitelbrechwert in einem von zwei Hauptschnitten des Brillenglases mit astigmatischer Wirkung.

Ausführungsform 4. Verfahren nach einer der vorangehenden Ausführungsformen, wobei durch das Aufnehmen des Bildes unter Verwendung des Brillenglases eine Veränderung eines durch das Brillenglas sichtbaren Bereichs der Augenpartie des Nutzers erfolgt.

Ausführungsform 5. Verfahren nach der vorangehenden Ausführungsform, wobei die Veränderung mindestens eine geometrische Abmessung des Auges betrifft.

Ausführungsform 6. Verfahren nach der vorangehenden Ausführungsform, wobei die geometrische Abmessung des Auges ausgewählt wird aus: einem aus einem Weiß-zu-weiß Abstand im Auge, einem horizontalen Abstand zwischen einem rechten Augenwinkel und einem linkem Augenwinkel des Auges und einem vertikaler Abstand zwischen einem Oberlid und einem Unterlid des Auges.

Ausführungsform 7. Verfahren nach einer der vorangehenden Ausführungsformen, wobei die Veränderung $V_E$ des sichtbaren Bereichs der Augenpartie des Nutzers oder der an die Augen angrenzende Gesichtspartie des Nutzers gemäß Gleichung (1) ermittelt wird:

$$V_E = \frac{1}{1-\frac{d}{n}D_1} \cdot \frac{1}{1-((e+e')S')} , \qquad (1)$$

wobei für $d$ = 0,0005 m bei einem Minusglas und $d$ = 0,001 m bei einem Plusglas, $n$ = 1,5 oder 1,52 oder 1,6, $e$ = 0,012 m und $e'$ = 0,013348 m verwendet werden, und wobei $S'$ dem Scheitelbrechwert des Brillenglases entspricht.

Ausführungsform 8. Verfahren nach einer der vorangehenden Ausführungsformen, wobei die an die Augen angrenzende Gesichtspartie eine seitliche Kopfform des Nutzers umfasst.

Ausführungsform 9. Verfahren nach der vorangehenden Ausführungsform, wobei die seitliche Kopfform einen Bereich um die betreffende Schläfe (Tempus) des Nutzers umfasst.

Ausführungsform 10. Verfahren nach einer der beiden vorangehenden Ausführungsformen, wobei durch das Aufnehmen des Bildes unter Verwendung des Brillenglases eine Veränderung einer Form der seitlichen Kopfform des Nutzers erfolgt.

Ausführungsform 11. Verfahren nach der vorangehenden Ausführungsform, wobei ein Brillenglas mit negativer dioptrischer Wirkung (Minusglas) eingesetzt wird.

Ausführungsform 12. Verfahren nach der vorangehenden Ausführungsform, wobei die Veränderung einen konkaven seitlichen Versatz der seitlichen Kopfform des Nutzers bewirkt.

Ausführungsform 13. Verfahren nach einer der drei vorangehenden Ausführungsformen, wobei ein Brillenglas mit positiver dioptrischer Wirkung (Plusglas) eingesetzt wird.

Ausführungsform 14. Verfahren nach der vorangehenden Ausführungsform, wobei die Veränderung in Form einen konvexen seitlichen Versatz der seitlichen Kopfform des Nutzers bewirkt.

Ausführungsform 15. Verfahren nach einer der vorangehenden Ausführungsformen, wobei das Verfahren ausgeführt wird, während der Nutzer eine Brille trägt.

Ausführungsform 16. Verfahren nach einer der vorangehenden Ausführungsformen, wobei zusätzlich ein weiteres Bild ohne Verwendung des Brillenglases als Vergleichsbild aufgenommen wird.

Ausführungsform 17. Verfahren nach einer der vorangehenden Ausführungsformen, wobei das Vergleichsbild zur Bestimmung der Veränderung aufgenommen wird.

Ausführungsform 18. Verfahren nach der vorangehenden Ausführungsforme, wobei das Vergleichsbild aufgenommen wird, während der Nutzer keine Brille trägt oder eine Brille, die eine Stützscheibe anstelle des Brillenglases umfasst, trägt.

Ausführungsform 19. Verfahren nach einer der vorangehenden Ausführungsformen, wobei zur Bestimmung der Veränderung auf ein bereits vorhandenes Vergleichsbild zurückgegriffen wird.

Ausführungsform 20. Verfahren nach einer der vorangehenden Ausführungsformen, wobei zur Bestimmung der Veränderung auf bereits vorhandene geometrische Abmessungen der Augen des Nutzers und/oder der an die Augen angrenzenden Gesichtspartie des Nutzers zurückgegriffen wird.

Ausführungsform 21. Verfahren nach einer der vorangehenden Ausführungsformen, wobei zusätzlich ein Abstand zwischen dem Auge des Nutzers und einer Kamera, die zur Aufnahme des Bildes eingerichtet ist, erfasst wird.

Ausführungsform 22. Verfahren nach der vorangehenden Ausführungsform, wobei der Abstand zwischen dem Auge des Nutzers und der Kamera eine Pupillendistanz ist.

Ausführungsform 23. Verfahren nach einer der beiden vorangehenden Ausführungsformen, wobei der Abstand mittels eines Entfernungsmessers erfasst wird.

Ausführungsform 24. Verfahren nach einer der drei vorangehenden Ausführungsformen, wobei der Abstand mittels der Kamera erfasst wird.

Ausführungsform 25. Verfahren nach einer der vier vorangehenden Ausführungsformen, wobei der Abstand mittels mindestens zwei Kameras, die gemeinsam zur Erfassung des Abstands eingerichtet sind, erfasst wird.

Ausführungsform 26. Verfahren nach der vorangehenden Ausführungsform, wobei die mindestens zwei Kameras gemeinsam in Form einer Stereokamera angeordnet sind.

Ausführungsform 27. Verfahren nach einer der vorangehenden Ausführungsformen, wobei zusätzlich die Hornhaut (Cornea) des Auges des Nutzers aufgenommen wird.

Ausführungsform 28. Verfahren nach der vorangehenden Ausführungsform, wobei eine erste Aufnahme ohne und eine zweite Aufnahme unter Projektion einer beliebigen, bekannten Streifenstruktur erfolgt.

Ausführungsform 29. Verfahren nach einer der beiden vorangehenden Ausführungsformen, wobei aus der Aufnahme der Hornhaut (Cornea) des Auges des Nutzers eine Oberflächenform der Hornhaut (Cornea) des Auges des Nutzers ermittelt wird.

Ausführungsform 30. Verfahren nach der vorangehenden Ausführungsform, wobei die Oberflächenform der Hornhaut (Cornea) des Auges des Nutzers zur Bestimmung der optometrischen Parameter Sphäre, Zylinder und Achse eingesetzt wird.

Ausführungsform 31. Verfahren nach der vorangehenden Ausführungsform, wobei aus der Bestimmung der optometrischen Parameter Sphäre, Zylinder und Achse ein astigmatischer Anteil einer Korrektion sowie der Achse bestimmt werden.

Ausführungsform 32. Verfahren nach der vorangehenden Ausführungsform, wobei zur Bestimmung der optometrischen Parameter Sphäre, Zylinder und Achse eine algorithmische Auswertung unter Einsatz von künstlicher Intelligenz, maschinellem Lernen und/oder eines Netzwerks, bevorzugt eines neuronalen Netzwerks erfolgt.

Ausführungsform 33. Verfahren nach der vorangehenden Ausführungsform, wobei aus einem einzigen Bild auf die optometrischen Parameter Sphäre, Zylinder und Achse geschlossen wird, insbesondere falls Daten über einen Einfluss einer sphärozylindrischen Korrektion auf meridionale Unterschiede der Vergrößerung und/oder der Verkleinerung vorliegen.

Ausführungsform 34. Computerprogramm zur Bestimmung mindestens eines optischen Parameters eines Brillenglases, wobei das Computerprogramm dazu eingerichtet ist, die Verfahrensschritte nach einer der vorangehenden Ausführungsformen durchzuführen.

Ausführungsform 35. Verfahren zur Herstellung mindestens eines Brillenglases, wobei die Herstellung des Brillenglases durch Bearbeitung eines Brillenglasrohlings erfolgt, wobei der Brillenglasrohling anhand von Zentrierdaten bearbeitet wird, wobei eine Festlegung der Zentrierdaten gemäß dem hierin beschriebenen Verfahren zur Bestimmung mindestens eines optischen Parameters des Brillenglases erfolgt.

Ausführungsform 36. Vorrichtung zur Bestimmung mindestens eines optischen Parameters eines Brillenglases, umfassend

- eine Kamera, die zur Aufnahme eines Bildes unter Verwendung eines Brillenglases eingerichtet ist; und
- eine Auswerteeinheit, die zur Bestimmung mindestens eines optischen Parameters des Brillenglases mittels Bildverarbeitung des Bildes eingerichtet ist,

wobei die Kamera dazu eingerichtet ist, die Aufnahme des Bildes derart vorzunehmen, dass das Bild eine die Augen einschließende Augenpartie und/oder eine an die Augen angrenzende Gesichtspartie eines Nutzers des Brillenglases umfasst.

Ausführungsform 37. Vorrichtung nach der vorangehenden Ausführungsform, wobei die Vorrichtung weiterhin dazu eingerichtet ist, einen Abstand zwischen der Vorrichtung und dem Auge des Nutzers zu bestimmen.

Ausführungsform 38. Vorrichtung nach der vorangehenden Ausführungsform, wobei die Auswerteeinheit weiterhin dazu eingerichtet ist, durch Bildverarbeitung des Bildes des Auges des Nutzers den Abstand zwischen der Vorrichtung und dem Auge des Nutzers zu bestimmen.

Ausführungsform 39. Vorrichtung nach einer der beiden vorangehenden Ausführungsformen, wobei die Vorrichtung weiterhin einen Entfernungsmesser umfasst, wobei der Entfernungsmesser weiterhin dazu eingerichtet ist, den Abstand zwischen der Vorrichtung und dem Auge des Nutzers zu bestimmen.

Ausführungsform 40. Vorrichtung nach einer der drei vorangehenden Ausführungsformen, wobei mindestens zwei Kameras vorgesehen sind, die gemeinsam zur Erfassung des den Abstand zwischen der Vorrichtung und dem Auge des Nutzers eingerichtet sind.

Ausführungsform 41. Vorrichtung nach der vorangehenden Ausführungsform, wobei die mindestens zwei Kameras gemeinsam in Form einer Stereokamera angeordnet sind.

Ausführungsform 42. Vorrichtung nach einer der fünf vorangehenden Ausführungsformen, wobei die Vorrichtung als mobiles Kommunikationsgerät ausgestaltet ist.

Ausführungsform 43. Vorrichtung nach der vorangehenden Ausführungsform, wobei das mobile Kommunikationsgerät die Kamera, die Auswerteeinheit und optional den Entfernungsmesser umfasst.

Ausführungsform 44. Vorrichtung nach einer der beiden vorangehenden Ausführungsformen, wobei das mobile Kommunikationsgerät als Smartphone ausgestaltet ist.

In einem weiteren Aspekt können das vorstehend beschriebene Verfahren und/oder die vorstehend beschriebene Vorrichtung und/oder das vorstehend beschriebene Computerprogramm zusammen mit wenigstens einem weiteren Verfahren und/oder wenigstens einer weiteren Vorrichtung und/oder einem weiteren Computerprogramm zur Anwendung kommen. Bei diesem wenigstens einen weiteren Verfahren kann es sich um ein beispielsweise um ein Verfahren zur Bestimmung eines Refraktionsfehlers eines Auges eines Nutzers handeln, wobei dieses Verfahren die folgenden Schritte umfasst:

a) Darstellen eines Zeichens auf einem Bildschirm, wobei ein Parameter des auf dem Bildschirm dargestellten Zeichens verändert wird;
b) Erfassen einer Reaktion des Nutzers in Abhängigkeit von dem auf dem Bildschirm dargestellten Zeichen;
c) Feststellen eines Zeitpunkts, zu dem sich aus der Reaktion des Nutzers eine Erkennbarkeit des auf dem Bildschirm dargestellten Zeichens für den Nutzer ergibt; und
d) Bestimmen eines Wertes für den Refraktionsfehler des Auges des Nutzers aus dem zu dem Zeitpunkt festgelegten Parameter, wobei das auf dem Bildschirm dargestellte Zeichen ein periodisches Muster ist, wobei der Parameter des auf dem Bildschirm dargestellten Musters mindestens eine Ortsfrequenz umfasst, und der Wert für den Refraktionsfehler aus der zu dem Zeitpunkt festgelegten Ortsfrequenz des Musters bestimmt wird.

Alternativ oder zusätzlich zu dem vorstehend beschriebenen Verfahren kann es sich bei dem wenigstens einen weiteren Verfahren beispielsweise auch um ein Verfahren zur Bestimmung eines Refraktionsfehlers eines Auges eines Nutzers handeln, wobei das Verfahren die folgenden Schritte umfasst:

a) Darstellen eines Zeichens auf einem Bildschirm, wobei ein Parameter des auf dem Bildschirm dargestellten Zeichens verändert wird;
b) Erfassen einer Augenbewegungsmetrik des Auges des Nutzers in Abhängigkeit von dem auf dem Bildschirm dargestellten Zeichen; und
c) Feststellen eines Zeitpunkts, zu dem sich aus der Augenbewegungsmetrik des Auges des Nutzers eine Erkennungsschwelle des Nutzers für das auf dem Bildschirm dargestellte Zeichen ergibt; und
d) Bestimmen eines Wertes für den Refraktionsfehler des Auges des Nutzers aus dem zu dem Zeitpunkt festgelegten Parameter.

Alternativ oder zusätzlich zu den vorstehend beschriebenen Verfahren kann es sich bei dem wenigstens einen weiteren Verfahren beispielsweise auch um ein Verfahren zum Vermessen der Brechkraftverteilung eines linken und/oder eines rechten Brillenglases in einer Brillenfassung handeln, in welchem in einem ersten Schritt mittels wenigstens einer Bilderfassungseinrichtung wenigstens eine erste Abbildung einer Szene aus wenigstens einer ersten Aufnahmeposition erfasst wird, wobei diese wenigstens eine erste Abbildung wenigstens zwei Strukturpunkte aufweist und ein linkes und/oder ein rechtes Brillenglas in einer Brillenfassung mit einem ein Koordinatensystem der Brillenfassung definierenden Abschnitt der Brillenfassung enthält, wobei der wenigstens eine Abbildungsstrahlengang für jeden dieser wenigstens zwei Strukturpunkte das erste und/oder das zweite Brillenglas der Brillenfassung jeweils mindestens einmal passiert und mindestens einmal nicht passiert. Jeder Abbildungsstrahlengang umfasst die Position des Strukturpunkts sowie den in die wenigstens eine Bilderfassungseinrichtung einfallenden Hauptstrahl. In einem weiteren Schritt, der zeitlich vor oder nach dem ersten Schritt liegen kann, wird wenigstens eine weitere Abbildung der Szene ohne das erste und/oder das zweite Brillenglas der Brillenfassung oder ohne die Brillenfassung enthaltend das erste und/oder das zweite Brillenglas mit denselben wenigstens zwei Strukturpunkten der ersten Abbildung einer Szene mittels wenigstens einer Bilderfassungseinrichtung aus der ersten Aufnahmeposition oder aus wenigstens einer von der ersten Aufnahmeposition verschiedenen weiteren Aufnahmeposition erfasst. Die wenigstens eine Bilderfassungseinrichtung kann in dem weiteren Schritt identisch oder verschieden zu der wenigstens einen Bilderfassungseinrichtung aus dem ersten Schritt sein. Bevorzugt ist die wenigstens eine Bilderfassungseinrichtung in dem weiteren Schritt identisch zu der wenigstens einen Bilderfassungseinrichtung aus dem ersten Schritt. Darauf werden in einem Schritt des Berechnens die Koordinaten dieser wenigstens zwei Strukturpunkte in einem zu dem Koordinatensystem der Brillenfassung referenzierten Koordinatensystem der Abbildung dieser Szene aus dem jeweiligen wenigstens einen Strahlengang dieser wenigstens zwei Strukturpunkte, welcher das linke und/oder rechte Brillenglas jeweils nicht passiert hat, und der wenigstens einen weiteren Abbildung der Szene mittels Bildauswertung bestimmt. Im Anschluss daran wird die Brechkraftverteilung in einem Schritt des Bestimmens einer Brechkraftverteilung für wenigstens einen Abschnitt des linken Brillenglases in dem Koordinatensystem der Brillenfassung und/oder in einem Schritt des Bestimmens einer Brechkraftverteilung für wenigstens einen Abschnitt des rechten Brillenglases in dem Koordinatensystem der Brillenfassung, jeweils aus den Abbildungsstrahlungsgängen, welche das jeweilige Brillenglas passiert haben, bestimmt.

Alternativ oder zusätzlich zu den vorstehend beschriebenen Verfahren kann es sich bei dem wenigstens einen weiteren Verfahren beispielsweise auch um ein Verfahren zum Vermessen der Brechkraftverteilung eines linken und/oder eines rechten Brillenglases in einer Brillenfassung handeln, in welchem in einem ersten Schritt mittels wenigstens einer Bilderfassungseinrichtung wenigstens eine erste Abbildung einer Szene aus wenigstens einer ersten Aufnahmeposition erfasst wird, wobei diese wenigstens eine erste Abbildung wenigstens zwei Strukturpunkte aufweist und ein linkes und/oder ein rechtes Brillenglas in einer Brillenfassung mit einem ein Koordinatensystem der Brillenfassung definierenden Abschnitt der Brillenfassung enthält, wobei der wenigstens eine Abbildungsstrahlengang für jeden dieser wenigstens zwei Strukturpunkte das erste und/oder das zweite Brillenglas der Brillenfassung jeweils mindestens einmal passiert und mindestens einmal nicht passiert. Jeder Abbildungsstrahlengang umfasst die Position des Strukturpunkts sowie den in die wenigstens eine Bilderfassungseinrichtung einfallenden Hauptstrahl. In einem weiteren Schritt, der zeitlich vor oder nach dem ersten Schritt liegen oder gleichzeitig mit dem ersten Schritt erfolgen kann, wird wenigstens eine weitere Abbildung der Szene mit dem linken und/oder dem rechten Brillenglas in einer Brillenfassung und mit einem ein Koordinatensystem der Brillenfassung definierenden Abschnitt der Brillenfassung mittels wenigstens einer Bilderfassungseinrichtung aus wenigstens einer von der ersten Aufnahmeposition verschiedenen weiteren Aufnahmeposition mit wenigstens einem Abbildungsstrahlengang für dieselben wenigstens zwei in der ersten Abbildung erfassten Strukturpunkte erfasst, wobei dieser wenigstens eine Abbildungsstrahlengang das erste und/oder das zweite Brillenglas der Brillenfassung jeweils mindestens einmal passiert und mindestens einmal nicht passiert. Darauf werden in einem weiteren Schritt die Koordinaten der wenigstens zwei Strukturpunkte in einem zu dem Koordinatensystem der Brillenfassung referenzierten Koordinatensystem der Szene aus dem jeweiligen wenigstens einen Strahlengang dieser wenigstens zwei Strukturpunkte, welcher das linke und/oder rechte Brillenglas jeweils nicht passiert hat und der wenigstens einen weiteren Abbildung der Szene mittels Bildauswertung berechnet. Anschließend wird die Brechkraftverteilung für wenigstens einen Abschnitt des linken Brillenglases in dem Koordinatensystem der Brillenfassung berechnet und/oder es wird die Brechkraftverteilung für wenigstens einen Abschnitt des rechten Brillenglases in dem Koordinatensystem der Brillenfassung, jeweils aus den Abbildungsstrahlengängen, welche das jeweilige Brillenglas passiert haben, bestimmt.

Bevorzugt wird in den beiden vorstehenden Verfahren zum Vermessen der Brechkraftverteilung eines linken und/oder eines rechten Brillenglases, vorzugsweise in einer Brillenfassung, eine Vielzahl von Strukturpunkten in der jeweils ersten Abbildung einer Szene aus jeweils wenigstens einer ersten Aufnahmeposition erfasst und die jeweils darauf folgenden Schritte anhand dieser jeweiligen Vielzahl von Strukturpunkten vorgenommen. Unter einer Vielzahl von Strukturpunkten werden bevorzugt wenigstens 10, weiter bevorzugt wenigstens 100, besonders bevorzugt wenigstens 1000 und ganz besonders bevorzugt wenigstens 10000 Strukturpunkte verstanden. Insbesondere ist eine Vielzahl von Strukturpunkten ≥100 Strukturpunkte und ≤1000 Strukturpunkte.

Alternativ oder zusätzlich zu den vorstehend beschriebenen Verfahren kann es sich bei dem wenigstens einen weiteren Verfahren beispielsweise auch um ein Verfahren zur Bestimmung der Brechkraftverteilung eines Brillenglases handeln, welches aus dem Größen- und/oder Formvergleich der Abbildung des vorderen Augenabschnittes für eine bestimmte Durchblickrichtung eine lokale Brechkraft ermöglicht. Hierzu wird wenigstens eine Aufnahme des vorderen Augenabschnittes mit und ohne davor befindlichem Brillenglas durchgeführt und die Aufnahme mit und ohne Brillenglas jeweils miteinander verglichen.

In einer übergeordneten Anwendung können die verschiedenen vorstehend beschriebenen Verfahren, d.h. das erfindungsgemäße Verfahren sowie das wenigstens eine weitere Verfahren, kombiniert werden, um beispielsweise aus einem Vergleich der jeweils erhaltenen Ergebnisse eine höhere Genauigkeit oder eine Plausibiltätsüberprüfung der in den einzelnen Verfahren erhaltenen Ergebnisse zu erhalten. Die verschiedenen vorstehend beschriebenen Verfahren können nacheinander oder gleichzeitig in der übergeordneten Anwendung erfolgen. Erfolgen die verschiedenen Verfahren nacheinander kann deren Reihenfolge unabhängig voneinander sein und/oder es kann sich um eine beliebige Reihenfolge handeln. Erfolgen die verschiedenen Verfahren nacheinander kann es bevorzugt sein, wenigstens eines der vorstehend beschriebenen Verfahren zur Bestimmung der Brechkraftverteilung zuletzt durchzuführen. Eine übergeordnete Anwendung kann beispielsweise ein die verschiedenen Verfahren umfassendes Computerprogramm sein.

Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigen:

Figur 1A bis 1C     eine schematische Darstellung der Funktionsweise der vorliegenden Erfindung;

Figur 2A und 2B     ein Diagramm des Einflusses eines Brillenglases auf eine Veränderung $V_E$ als Funktion der Brechzahl $n$ des Materials des Brillenglases bei gleichem Hornhautscheitelabstand (Figur 2A) bzw. als Funktion des Hornhautscheitelabstands bei gleicher Brechzahl $n$ (Figur 2B); und

Figur 3     ein bevorzugtes Ausführungsbeispiel des erfindungsgemäßen Verfahrens und der zugehörigen Vorrichtung zur Bestimmung des mindestens eines optischen Parameters des Brillenglases.

Ausführungsbeispiele

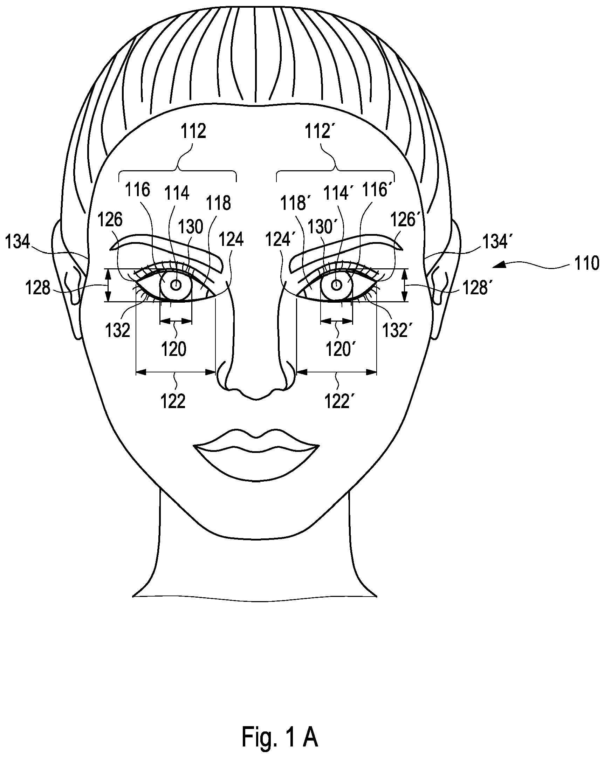

In den Figuren 1A bis 1C ist schematisch die Funktionsweise der vorliegenden Erfindung dargestellt.

Figur 1A zeigt hierzu schematisch eine Augenpartie 110 eines Nutzers, mit einem rechten Auge 112 und einem linken Auge 112'. Die Begriffe "rechts" und "links" sind hierbei aus einer Blickrichtung des Nutzers anzugeben. Jedes der Augen 112, 112' des Nutzers umfasst eine Pupille 114, 114', eine die Pupille 114, 114' jeweils umgebende Iris 116, 116' und einen die Iris 116, 116' jeweils umgebenden weißen Bereich 118, 118'. Hierbei kann bevorzugt ein Weiß-zu-weiß Abstand 120, 120' als gemeinsamer Durchmesser eines von der Hornhaut (Cornea) geschützten transparenten Bereichs des jeweiligen Auges 112, 112', der jeweils die Pupille 114, 114' und die Iris 116, 116' umfasst, angegeben werden. Alternativ oder zusätzlich können ein horizontaler Abstand 122, 122' von einem rechten Augenwinkel 124, 124' zu einem linkem Augenwinkel 126, 126' jedes Auges 112, 112' oder ein vertikaler Abstand 128, 128' zwischen einem Oberlid 130, 130' und einem Unterlid 132, 132' messtechnisch erfasst werden. Weiterhin zeigt die Augenpartie 110 des Nutzers rechts vom rechten Auge 112 und links vom linken Auge 112' jeweils eine seitliche Kopfform 134, 134' des Nutzers.

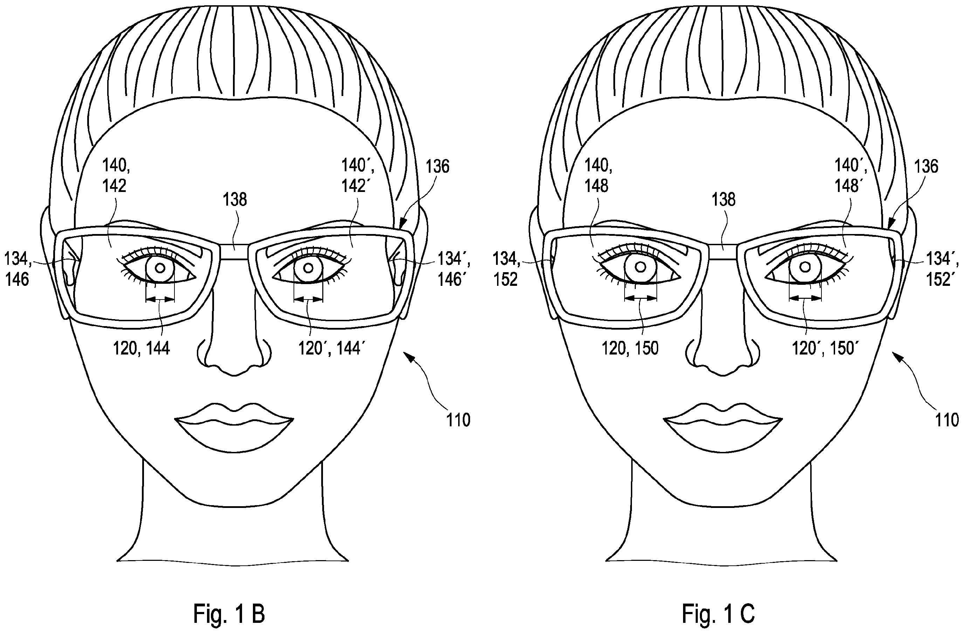

Der Nutzer in der Darstellung gemäß Figur 1A trägt keine Sehhilfe. Alternativ kann der Nutzer eine Sehhilfe tragen, welche eine Stützscheibe (hier nicht dargestellt) umfasst. Demgegenüber zeigen die Figuren 1B und 1C jeweils die Augenpartie 110 desselben Nutzers, der hier jedoch jeweils eine Brille 136 trägt. Bei der in den Figuren 1B und 1C dargestellten Brille 136 handelt es sich jeweils um eine Vollrandbrille, welche eine Brillenfassung 138 aufweist, die über zwei Aufnahmen für jeweils ein Brillenglas 140, 140' verfügt, welche die beiden Brillengläser 140, 140' jeweils umschließen. Im Rahmen der vorliegenden Erfindung kann der Nutzer alternativ jedoch auch eine Halbrandbrille (hier nicht dargestellt), in denen die beiden Brillengläser 140, 140' nur teilweise an die Brillenfassung 138 angrenzen, oder eine rahmenlose Brille (hier ebenfalls nicht dargestellt) tragen, in welcher die Brillengläser 140, 140' jeweils über eine Bohrung zur Aufnahme einer die Brillenfassung 138 verbindende Halterung verfügen. Darüber hinaus kann die Brille 136 weitere Komponenten (hier nicht dargestellt) aufweisen, insbesondere jeweils einen Brillenbügel zum Tragen der Brille 136 an jedem Ohr des Nutzers und, bevorzugt, jeweils eine Auflage (Pad) an jeder Seite einer Nase eines Nutzers. Eine Gesamtheit aus der Brillenfassung 138, den Brillenbügeln und den optional vorhandenen Pads kann gemeinsam auch als "Brillengestell" bezeichnet werden.

Aus einem Vergleich der Augenpartien 110 zwischen den Figuren 1A und 1B einerseits und den Figuren 1A und 1C andererseits ergeben sich aufgrund des jeweiligen Tragens der Brille 136 mit dioptrischer Wirkung durch den Nutzer folgende Unterschiede, die erfindungsgemäß zur Bestimmung des mindestens eines optischen Parameters jedes der beiden Brillengläser 140, 140' herangezogen werden.

Die Brillengläser 140, 140' der in Figur 1B von dem Nutzer getragenen Brille 136 umfassen jeweils ein Brillenglas mit negativer dioptrischer Wirkung, das auch als "Minusglas" 142, 142' bezeichnet wird, und das sich aufgrund dieser Wirkung zur Korrektur einer Kurzsichtigkeit (Myopie) des Nutzers einsetzen lässt. Im Vergleich zu einer Stützscheibe weist jedes Minusglas 142, 142' eine erhöhe Dicke am Glasrand auf, während die Dicke jedes Minusglases 142, 142' in der Glasmitte verringert ist. In der Darstellung gemäß Figur 1B wird angenommen, dass die beiden Minusgläser 142, 142' dieselbe dioptrische Wirkung aufweisen. Grundsätzlich ist jedoch ein Unterschied in der dioptrischen Wirkung zwischen den beiden Minusgläsern 142, 142' denkbar und könnte in analoger Weise zu der nachfolgenden Beschreibung zu der erfindungsgemäßen Bestimmung des mindestens eines optischen Parameters für jedes Minusgläser 142, 142' herangezogen werden.

Aufgrund der dioptrischen Wirkung und unter Berücksichtigung des Vorzeichen ihres Scheitelbrechwertes bewirken die Minusgläser 142, 142' bei einem Blick von vorn durch das jeweilige Minusglas 142, 142' hindurch auf das betreffende Auge 112, 112' des Nutzers, dass ein durch die Minusgläser 142, 142' sichtbarer Bereich der Augenpartie 110 des Nutzers verkleinert dargestellt wird. Wie oben bereits ausgeführt, hängt gemäß Gleichung (1) eine Größe einer beobachtbaren Veränderung $V_E$ des sichtbaren Bereichs der Augenpartie 110 des Nutzers hierbei von einer Größe eines Scheitelbrechwerts S' der Minusgläser 142, 142' ab:

$$V_E = \frac{1}{1 - \frac{d}{n}D_1} \cdot \frac{1}{1 - ((e+e')S')}, \qquad (1)$$

wobei hier $d$ = 0,0005 m, die Brechzahl $n$ = 1,5 oder 1,52 oder 1,6, $e$ = 0,012 m und $e'$ = 0,013348 m sind. In erster Näherung entspricht D1 hierbei dem Scheitelbrechwert S' bei planaren Brillengläsern (Planogläsern).

Die beobachtbare Veränderung $V_E$ des sichtbaren Bereichs der Augenpartie 110 des Nutzers kann eine Verringerung 144 des Weiß-zu-weiß Abstandes 120, 120' bewirken, die sich auf einfache Weise messtechnisch erfassen lässt. Beispielsweise kann sich der Weiß-zu-weiß Abstand 120, 120' von 0,52 mm in der Ausführung gemäß Figur 1A um etwa 5 % auf 0,47 mm in der Ausführung gemäß Figur 1B verringern. Andere Messwerte sind jedoch möglich. Für einen möglichst genauen Nachweis des Weiß-zu-weiß Abstandes 120, 120' lassen sich Algorithmen einsetzen, insbesondere Pixelmatching, maschinelles Lernen, neuronale Netzwerke, oder eine Anpassung von Parametern an eine vorgegebene Funktion (Fits). Alternativ oder zusätzlich kann auch die Verringerung 144 des horizontalen Abstands 122, 122' von dem rechten Augenwinkel 124, 124' zu dem linkem Augenwinkel 126, 126' jedes Auges 112, 112' oder des vertikalen Abstands 128, 128' zwischen dem Oberlid 130, 130' und dem Unterlid 132, 132' messtechnisch erfasst werden (hier nicht dargestellt), um auf diese Weise die beobachtbare Veränderung $V_E$ des sichtbaren Bereichs der Augenpartie 110 des Nutzers zu ermitteln.

Gemäß Gleichung (1) ist die in Figur 1B beobachtbare Veränderung $V_E$ des sichtbaren Bereichs der Augenpartie 110 des Nutzers nicht nur abhängig vom Vorzeichen, sondern auch von der Größe des Scheitelbrechwerts S'. Aus der Ermittlung der beobachtbaren Veränderung $V_E$ des sichtbaren Bereichs der Augenpartie 110 des Nutzers, bevorzugt aus der Verringerung 144 des Weiß-zu-weiß Abstandes 120, 120', kann somit mittels einer bekannten Kalibrierung auf Vorzeichen und Größe des Scheitelbrechwerts S' des jeweiligen Brillenglases 140, 140' geschlossen werden.

In einer weiteren bevorzugten Ausführung kann alternativ oder zusätzlich auf ein sphärisches Äquivalent der Fernkorrektion des Auges 112, 112' des Nutzers geschlossen werden, indem eine Änderung 146 der seitlichen Kopfform 134, 134' des Nutzers messtechnisch erfasst wird. Bei der Verwendung von Minusgläsern 142, 142' in der Ausführung gemäß Figur 1B zeigt die Änderung 146 einen konkaven seitlichen Versatz der seitlichen Kopfform 134, 134' in Richtung des betreffenden Auges 112, 112' hin. Für einen möglichst genauen Nachweis der Änderung 146 der seitlichen Kopfform 134, 134' lassen sich auch hier bekannte Algorithmen einsetzen, insbesondere Pixelmatching, maschinelles Lernen, neuronale Netzwerke, oder eine Anpassung von Parametern an eine vorgegebene Funktion (Fits). Auch hierbei ist die in Figur 1B beobachtbare Änderung 146 der seitlichen Kopfform 134, 134' nicht nur abhängig vom Vorzeichen, sondern auch von der Größe des Scheitelbrechwerts S'. Aus der Ermittlung der beobachtbaren Änderung 146 der seitlichen Kopfform 134, 134' kann somit mittels einer bekannten Kalibrierung ebenfalls auf Vorzeichen und Größe des Scheitelbrechwerts S' des jeweiligen Brillenglases 140, 140' geschlossen werden.

Im Unterschied zu der Ausführung gemäß Figur 1B umfassen die Brillengläser 140, 140' der in Figur 1C von dem Nutzer getragenen Brille 136 jeweils ein Brillenglas mit positiver optischer Wirkung, das auch als "Plusglas" 148, 148' bezeichnet wird, und das sich aufgrund dieser Wirkung zur Korrektur einer Weitsichtigkeit (Hyperopie) des Nutzers einsetzen lässt. Im Vergleich zu einer Stützscheibe weist jedes Plusglas 148, 148' eine verringerte Dicke am Glasrand auf, während die Dicke jedes Plusglases 148, 148' in der Glasmitte erhöht ist. In der Darstellung gemäß Figur 1C wird ebenfalls angenommen, dass die beiden Plusgläser 148, 148' dieselbe dioptrische Wirkung aufweisen. Grundsätzlich ist jedoch ein Unterschied in der dioptrischen Wirkung zwischen den beiden Plusgläsern 148, 148' denkbar und könnte in analoger Weise zu der nachfolgenden Beschreibung zu der erfindungsgemäßen Bestimmung des mindestens eines optischen Parameters für jedes der Plusgläser 148, 148' herangezogen werden.

Aufgrund der dioptrischen Wirkung und unter Berücksichtigung des Vorzeichen ihres Scheitelbrechwertes bewirken die Plusgläser 148, 148' bei einem Blick von vorn durch das jeweilige Plusglas 148, 148' hindurch auf das betreffende Auge 112, 112' des Nutzers, dass ein durch die Plusgläser 148, 148' sichtbarer Bereich der Augenpartie 110 des Nutzers vergrößert dargestellt wird. Wie oben bereits ausgeführt, hängt gemäß Gleichung (1) eine Größe einer beobachtbaren Veränderung $V_E$ des sichtbaren Bereichs der Augenpartie 110 des Nutzers hierbei von einer Größe eines Scheitelbrechwerts S' der Plusgläser 148, 148' ab:

$$V_E = \frac{1}{1-\frac{d}{n}D_1} \cdot \frac{1}{1-((e+e')S')}, \qquad (1)$$

wobei hier $d$ = 0,001 m, die Brechzahl $n$ = 1,5 oder 1,52 oder 1,6, $e$ = 0,012 m und $e'$ = 0,013348 m sind. In erster Näherung entspricht D1 hierbei dem Scheitelbrechwert S' bei planaren Brillengläsern (Planogläsern).

Die beobachtbare Veränderung $V_E$ des sichtbaren Bereichs der Augenpartie 110 des Nutzers kann eine Erhöhung 150 des Weiß-zu-weiß Abstandes 120, 120' bewirken, die sich auf einfache Weise messtechnisch erfassen lässt. Beispielsweise kann sich der Weiß-zu-weiß Abstand 120, 120' von 0,52 mm in der Ausführung gemäß Figur 1A um etwa 5 % auf 0,57 mm in der Ausführung gemäß Figur 1C vergrößern. Andere Messwerte sind jedoch möglich. Alternativ oder zusätzlich kann auch die Vergrößerung 150 des horizontalen Abstands 122, 122' von dem rechten Augenwinkel 124, 124' zu dem linkem Augenwinkel 126, 126' jedes Auges 112, 112' oder des vertikalen Abstands 128, 128' zwischen dem Oberlid 130, 130' und dem Unterlid 132, 132' messtechnisch erfasst werden (hier nicht dargestellt).

Gemäß Gleichung (1) ist die in Figur 1B beobachtbare Veränderung $V_E$ des sichtbaren Bereichs der Augenpartie 110 des Nutzers nicht nur abhängig vom Vorzeichen, sondern auch von der Größe des Scheitelbrechwerts S'. Aus der Ermittlung der beobachtbaren Veränderung $V_E$ des sichtbaren Bereichs der Augenpartie 110 des Nutzers, bevorzugt aus der Vergrößerung 150 des Weiß-zu-weiß Abstandes 120, 120', kann somit mittels Kalibrierung auf Vorzeichen und Größe des Scheitelbrechwerts S' des jeweiligen Brillenglases 140, 140' geschlossen werden.

In einer weiteren bevorzugten Ausführung kann alternativ oder zusätzlich auf ein sphärisches Äquivalent der Fernkorrektion des Auges 112, 112' des Nutzers geschlossen werden, indem auch hier eine Änderung 152 der seitlichen Kopfform 134, 134' des Nutzers messtechnisch erfasst wird. Bei der Verwendung von Plusgläsern 148, 148' in der Ausführung gemäß Figur 1C zeigt die Änderung 152 einen konvexen seitlichen Versatz der seitlichen Kopfform 134, 134' nach außen weg von dem betreffenden Auge 112, 112'. Auch hierbei ist die in Figur 1C beobachtbare Änderung 152 der seitlichen Kopfform 134, 134' nicht nur abhängig vom Vorzeichen, sondern auch von der Größe des Scheitelbrechwerts S'. Aus der Ermittlung der beobachtbaren Änderung 152 der seitlichen Kopfform 134, 134' kann somit auch hier mittels Kalibrierung ebenfalls auf Vorzeichen und Größe des Scheitelbrechwerts S' des jeweiligen Brillenglases 140, 140' geschlossen werden.

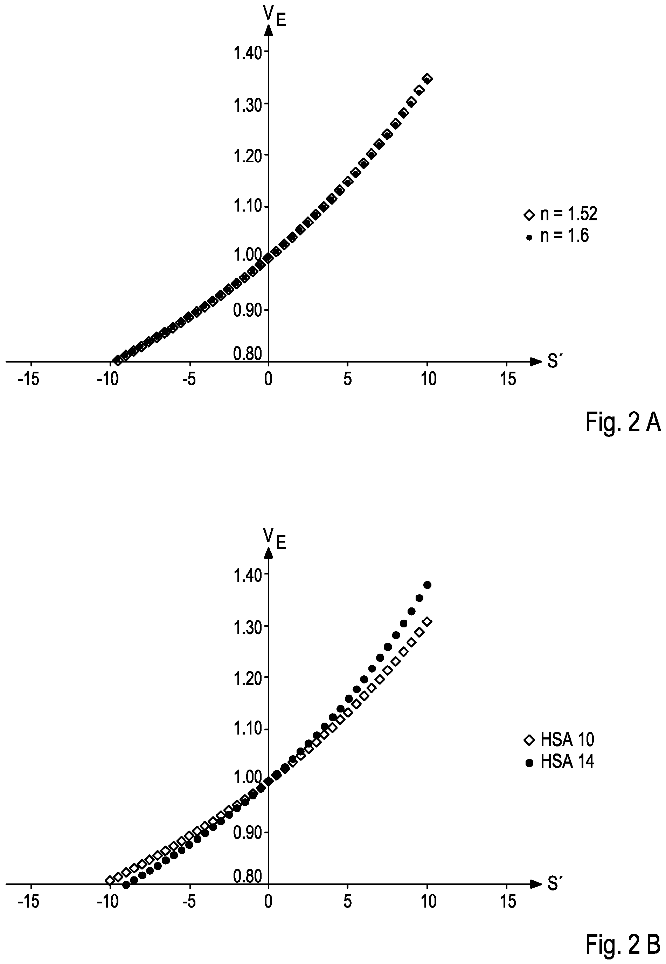

Figur 2A zeigt ein Diagramm, das einen lediglich sehr geringen Einfluss des Brillenglases 140, 140' auf die Veränderung $V_E$ belegt. Dargestellt ist hier die Veränderung $V_E$ als Funktion der Brechzahl $n$ des Materials des Brillenglases 140, 140' bei gleichem Hornhautscheitelabstand.

Figur 2B zeigt ein weiteres Diagramm, das demgegenüber einen größeren Einfluss des Brillenglases 140, 140' auf die Veränderung $V_E$ belegt. Dargestellt ist hier die Veränderung $V_E$ als Funktion des Hornhautscheitelabstands (HSA) bei gleicher Brechzahl $n$ des Materials des Brillenglases 140, 140'.

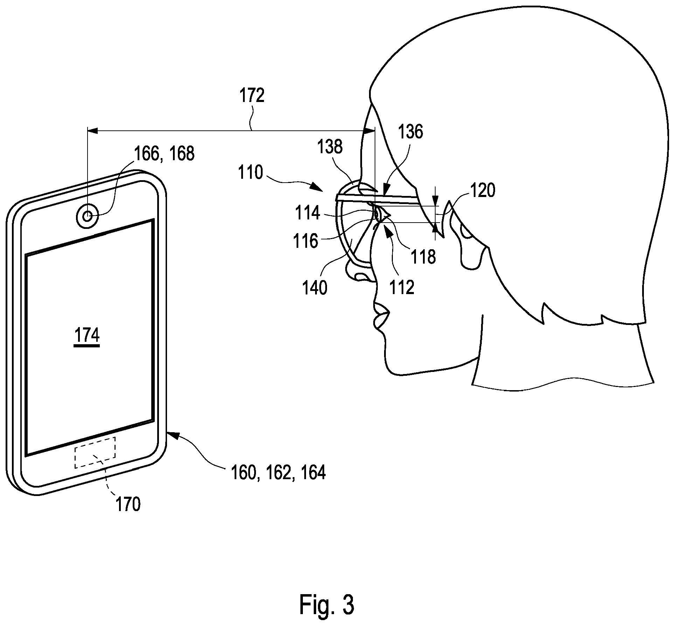

Figur 3 zeigt schematisch ein bevorzugtes Ausführungsbeispiels des erfindungsgemäßen Verfahrens und der zugehörigen Vorrichtung 160 zur Bestimmung des mindestens eines optischen Parameters des Brillenglases 140. Die Vorrichtung 160 ist in der Darstellung gemäß Figur 3 - jedoch ohne Beschränkung der Allgemeinheit - als mobiles Kommunikationsgerät 162 in Form eines Smartphones 164 ausgeführt. Eine Ausführung der Vorrichtung 160 in Form eines anderen mobilen Kommunikationsgeräts 162, insbesondere als Mobiltelefon (Handy) oder Tablet, oder in Form einer anderen Einrichtung ist jedoch ebenfalls denkbar.

Die Vorrichtung 160 umfasst eine Kamera 166, wobei es sich bei der Kamera 166 bevorzugt um eine Frontkamera 168 des Smartphones 118 handeln kann. Erfindungsgemäß ist die Kamera 162 zur Aufnahme eines Bildes eingerichtet, wobei das Bild eine die Augen 112 einschließende Augenpartie 110 und/oder eine an die Augen 112 angrenzende Gesichtspartie 110 eines Nutzers des Brillenglases 140 umfasst.

Die Vorrichtung 110 umfasst weiterhin eine Auswerteeinheit 170, die zur Bestimmung des mindestens eines optischen Parameters des Brillenglases 140 mittels Bildverarbeitung des Bildes eingerichtet ist. In einer besonders bevorzugten Ausgestaltung kann die Auswerteeinheit 170 weiterhin eine Einrichtung zur Erfassung eines Abstands des Auges 112 des Nutzers von der Kamera 166 aufweisen. Hierzu kann durch die Bildverarbeitung des Bildes, das die Kamera 166 insbesondere von der Augenpartie 110 des Nutzers aufgenommen hat, mittels einer Bestimmung eines Abstandes zwischen der Kamera 166 und dem Auge 112 des Nutzers, die auch als "Pupillendistanz" 172 bezeichnet wird, eine Ermittlung eines Absolutwertes für den Weiß-zu-weiß Abstand 120 des Auges 112 des Nutzers erfolgen. In einer alternativen Ausgestaltung (nicht dargestellt) können mindestens zwei Kameras vorgesehen sein, die gemeinsam in Form einer Stereokamera angeordnet sind und daher zur Erfassung der Pupillendistanz 172 eingerichtet sind. Alternativ oder zusätzlich kann die Vorrichtung 160 über einen gesonderten Entfernungsmesser (nicht dargestellt) verfügen, der zur Bestimmung der Pupillendistanz 172 eingerichtet ist. Zusätzlich kann die Vorrichtung 160 weitere Bestandteile aufweisen, insbesondere einen Bildschirm 174 zur Anzeige von Ergebnissen und/oder Anforderungen an den Nutzer.

Gemäß dem vorliegenden Verfahren zur Bestimmung des mindestens eines optischen Parameters des Brillenglases 140 erfolgt gemäß Schritt a) das Aufnehmen eines Bildes, das eine die Augen 112 einschließende Augenpartie 110 und/oder eine an die Augen 112 angrenzende Gesichtspartie eines Nutzers umfasst, wobei der Nutzer, wie in Figur 3 schematisch dargestellt, vorzugsweise die das Brillenglas 140 umfassende Brille 136 trägt. Gemäß Schritt b) erfolgt ein Ermitteln mindestens eines optischen Parameters des Brillenglases 140 mittels Bildverarbeitung des während Schritt a) aufgenommen Bildes, wobei vorzugsweise die oben in der Beschreibung zu den Figuren 1A bis 1C dargestellte Vorgehensweise eingesetzt wird.

Bezugszeichenliste

| 110 | Augenpartie |
| 112, 112' | Auge |
| 114, 114' | Pupille |
| 116, 116' | Iris |
| 118, 118' | weißer Bereich |
| 120, 120' | Weiß-zu-weiß Abstand |
| 122, 122' | horizontaler Abstand |
| 124, 124' | rechter Augenwinkel |
| 126, 126' | linker Augenwinkel |
| 128, 128' | vertikaler Abstand |
| 130, 130' | Oberlid |
| 132, 132' | Unterlid |
| 134, 134' | seitliche Kopfform |
| 136 | Brille |
| 138 | Brillenfassung |
| 140, 140' | Brillenglas |
| 142, 142' | Minusglas |
| 144 | Verringerung |
| 146 | (konkave) Veränderung |
| 148, 148' | Plusglas |
| 150 | Vergrößerung |
| 152 | (konvexe) Veränderung |
| 160 | Vorrichtung zur Bestimmung des mindestens eines optischen Parameters eines Brillenglases |

| 162 | mobiles Kommunikationsgerät |
| 164 | Smartphone |
| 166 | Kamera |
| 168 | Frontkamera |
| 170 | Auswerteeinheit |
| 172 | Pupillendistanz |
| 174 | Bildschirm |

**Patentansprüche**

1. Verfahren zur Bestimmung mindestens eines optischen Parameters eines Brillenglases (140, 140'), wobei das Verfahren folgende Schritte umfasst:

   a) Aufnehmen eines Bildes unter Verwendung eines Brillenglases (140, 140'); und
   b) Ermitteln mindestens eines optischen Parameters des Brillenglases (140, 140') mittels Bildverarbeitung des Bildes,

   **dadurch gekennzeichnet,**
   **dass** das Bild eine die Augen (112, 112') einschließende Augenpartie (110, 110') und/oder eine an die Augen (112, 112') angrenzende Gesichtspartie eines Nutzers des Brillenglases (140, 140') umfasst.

2. Verfahren nach dem vorangehenden Anspruch, **dadurch gekennzeichnet, dass** ein Scheitelbrechwert als der optische Parameter ermittelt wird.

3. Verfahren nach einem der vorangehenden Ansprüche, **dadurch gekennzeichnet, dass** durch das Aufnehmen des Bildes unter Verwendung des Brillenglases (140, 140') eine Veränderung (144, 146, 150, 152) eines durch das Brillenglas (140, 140') sichtbaren Bereichs der Augenpartie (110) des Nutzers erfolgt.

4. Verfahren nach dem vorangehenden Anspruch, **dadurch gekennzeichnet, dass** die Veränderung (144, 146, 150, 152) mindestens eine geometrische Abmessung des Auges (112, 112') betrifft.

5. Verfahren nach dem vorangehenden Anspruch, **dadurch gekennzeichnet, dass** die geometrische Abmessung des Auges ausgewählt wird (112, 112') aus einem Weiß-zu-weiß Abstand (120, 120') im Auge (112, 112'), einem horizontalen Abstand (122, 122') zwischen einem rechten Augenwinkel (124, 124') und einem linkem Augenwinkel (126, 126') des Auges (112, 112') und einem vertikaler Abstand (128, 128') zwischen einem Oberlid (130, 130') und einem Unterlid (132, 132') des Auges (112, 112').

6. Verfahren nach einem der sieben vorangehenden Ansprüche, **dadurch gekennzeichnet, dass** die Veränderung $V_E$ des sichtbaren Bereichs der Augenpartie (110) des Nutzers oder der an die Augen angrenzende Gesichtspartie des Nutzers gemäß Gleichung (1) ermittelt wird:

$$V_E = \frac{1}{1-\frac{d}{n}D_1} \cdot \frac{1}{1-((e+e')S')} , \qquad (1)$$

wobei für $d$ = 0,0005 m bei dem Minusglas (142, 142') und $d$ = 0,001 m bei dem Plusglas (148, 148'), $n$ = 1,5 oder 1,52 oder 1,6, $e$ = 0,012 m und $e'$ = 0,013348 m verwendet werden, und wobei S' dem Scheitelbrechwert des Brillenglases (140, 140') entspricht.

7. Verfahren nach einem der vorangehenden Ansprüche, **dadurch gekennzeichnet, dass** die an die Augen (112, 112') angrenzende Gesichtspartie eine seitliche Kopfform (134, 134') des Nutzers umfasst.

8. Verfahren nach dem vorangehenden Anspruch, **dadurch gekennzeichnet, dass** durch das Aufnehmen des Bildes unter Verwendung des Brillenglases (140, 140') eine Veränderung (146, 152) der seitlichen Kopfform (134, 134') des Nutzers erfolgt.

9. Verfahren nach dem vorangehenden Anspruch, **dadurch gekennzeichnet, dass** ein Minusglas (142, 142') einen konkaven seitlichen Versatz der seitlichen Kopfform (134, 134') bewirkt.

10. Verfahren nach dem vorangehenden Anspruch, **dadurch gekennzeichnet, dass** ein Positivglas (148, 148') einen konvexen seitlichen Versatz der seitlichen Kopfform (134, 134') des Nutzers bewirkt.

11. Verfahren nach einem der acht vorangehenden Ansprüche, **dadurch gekennzeichnet, dass** zur Bestimmung der Veränderung (144, 146, 150, 152) zusätzlich ein weiteres Bild ohne Verwendung des Brillenglases (140, 140') als Vergleichsbild aufgenommen wird oder dass auf ein bereits vorhandenes Vergleichsbild oder auf bereits vorhandene geometrische Abmessungen der Augen (112, 112') des Nutzers und/oder der an die Augen (112, 112') angrenzenden Gesichtspartie des Nutzers zurückgegriffen wird.

12. Computerprogramm zur Bestimmung mindestens eines optischen Parameters eines Brillenglases, wobei das Computerprogramm dazu eingerichtet ist, die folgenden Verfahrensschritte durchzuführen:

    a) Aufnehmen eines Bildes unter Verwendung eines Brillenglases (140, 140'); und
    b) Ermitteln mindestens eines optischen Parameters des Brillenglases (140, 140') mittels Bildverarbeitung des Bildes,

**dadurch gekennzeichnet,**
**dass** das Bild eine die Augen (112, 112') einschließende Augenpartie (110, 110') und/oder eine an die Augen (112, 112') angrenzende Gesichtspartie eines Nutzers des Brillenglases (140, 140') umfasst.

13. Verfahren zur Herstellung mindestens eines Brillenglases (140, 140'), wobei die Herstellung des Brillenglases (140, 140') durch Bearbeitung eines Brillenglasrohlings erfolgt, wobei der Brillenglasrohling anhand von Zentrierdaten bearbeitet wird, wobei eine Festlegung der Zentrierdaten die folgenden Schritte umfasst:

    a) Aufnehmen eines Bildes unter Verwendung eines Brillenglases (140, 140'); und
    b) Ermitteln mindestens eines optischen Parameters des Brillenglases (140, 140') mittels Bildverarbeitung des Bildes,

**dadurch gekennzeichnet,**
**dass** das Bild eine die Augen (112, 112') einschließende Augenpartie (110, 110') und/oder eine an die Augen (112, 112') angrenzende Gesichtspartie eines Nutzers des Brillenglases (140, 140') umfasst.

14. Vorrichtung (160) zur Bestimmung mindestens eines optischen Parameters eines Brillenglases (140, 140'), wobei die Vorrichtung (160) umfasst:

    - eine Kamera (166), die zur Aufnahme eines Bildes unter Verwendung eines Brillenglases (140, 140') eingerichtet ist; und
    - eine Auswerteeinheit (170), die zur Bestimmung mindestens eines optischen Parameters des Brillenglases (140, 140') mittels Bildverarbeitung des Bildes eingerichtet ist,

**dadurch gekennzeichnet,**
**dass** die Kamera (166) dazu eingerichtet ist, die Aufnahme des Bildes derart vorzunehmen, dass das Bild eine die Augen (112, 112') einschließende Augenpartie (110, 110') und/oder eine an die Augen (112, 112') angrenzende Gesichtspartie eines Nutzers des Brillenglases (140, 140') umfasst.

15. Vorrichtung (110) nach dem vorangehenden Anspruch, **dadurch gekennzeichnet, dass** die Vorrichtung (160) weiterhin dazu eingerichtet ist, einen Abstand zwischen der Vorrichtung (160) und dem Auge (112, 112') des Nutzers zu bestimmen.

Fig. 1 A

Fig. 1 C

Fig. 1 B

Fig. 2 A

Fig. 2 B

Fig. 3

**Europäisches Patentamt**
**European Patent Office**
**Office européen des brevets**

# EUROPÄISCHER RECHERCHENBERICHT

Nummer der Anmeldung

EP 19 17 0551

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/134275 A1 (EIDGENOSSISCHE TECHNISCHE HOCHSCHULE ZURICH [CH]) 10. August 2017 (2017-08-10) | 1-5, 7-12,14, 15 | INV. G02C13/00 G01M11/02 |
| A | * Absätze [0045] - [0047], [00107], [00144], [00148] - [00150]; Ansprüche 38, 39; Abbildung 13 * * Absätze [00221] - [00223] * | 13 | |
| X | EP 2 608 109 A1 (THOMSON LICENSING [FR]) 26. Juni 2013 (2013-06-26) | 1-5,11, 12,14,15 | |
| A | * Absätze [0001], [0006], [0007], [0016], [0022], [0023], [0033] - [0036]; Abbildung 3 * | 6-10,13 | |
| X | WO 2017/125902 A1 (6 OVER 6 VISION LTD [IL]) 27. Juli 2017 (2017-07-27) | 1-5,11, 12,14,15 | |
| A | * Absätze [0058], [0059], [00617] - [00619]; Anspruch 29 * | 6-10,13 | |
| A | EP 2 830 001 A1 (FUJITSU LTD [JP]) 28. Januar 2015 (2015-01-28) * Absätze [0004], [0009] - [0012], [0018], [0019], [0023] - [0027], [0050], [0051]; Abbildung 3 * | 1-15 | RECHERCHIERTE SACHGEBIETE (IPC) G02C G01M |
| X | DE 10 2011 115239 A1 (RODENSTOCK GMBH [DE]) 28. März 2013 (2013-03-28) | 13 | |
| A | * Absätze [0012], [0014], [0020] - [0022], [0026] * | 15 | |

Der vorliegende Recherchenbericht wurde für alle Patentansprüche erstellt

| Recherchenort | Abschlußdatum der Recherche | Prüfer |
|---|---|---|
| München | 18. Oktober 2019 | Vazquez Martinez, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 17 0551

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2019

| Im Recherchenbericht angeführtes Patentdokument | Datum der Veröffentlichung | Mitglied(er) der Patentfamilie | Datum der Veröffentlichung |
|---|---|---|---|
| WO 2017134275 A1 | 10-08-2017 | KEINE | |
| EP 2608109 A1 | 26-06-2013 | BR 102012031716 A2 | 20-01-2015 |
| | | CN 103163663 A | 19-06-2013 |
| | | EP 2608109 A1 | 26-06-2013 |
| | | FR 2984565 A1 | 21-06-2013 |
| | | JP 6529208 B2 | 12-06-2019 |
| | | JP 2013127621 A | 27-06-2013 |
| | | KR 20130070551 A | 27-06-2013 |
| | | US 2013155393 A1 | 20-06-2013 |
| WO 2017125902 A1 | 27-07-2017 | AU 2017210251 A1 | 09-08-2018 |
| | | BR 112018014825 A2 | 11-12-2018 |
| | | CA 3011793 A1 | 27-07-2017 |
| | | CN 109313102 A | 05-02-2019 |
| | | EP 3405767 A1 | 28-11-2018 |
| | | JP 2019511699 A | 25-04-2019 |
| | | KR 20180105666 A | 28-09-2018 |
| | | SG 11201806113P A | 30-08-2018 |
| | | US 2019072455 A1 | 07-03-2019 |
| | | WO 2017125902 A1 | 27-07-2017 |
| EP 2830001 A1 | 28-01-2015 | EP 2830001 A1 | 28-01-2015 |
| | | JP 6307805 B2 | 11-04-2018 |
| | | JP 2015025859 A | 05-02-2015 |
| | | US 2015029323 A1 | 29-01-2015 |
| DE 102011115239 A1 | 28-03-2013 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016181310 A1

**In der Beschreibung aufgeführte Nicht-Patentliteratur**

- **NACH L. N. THIBOS ; W. WHEELER ; D. HORNER.** Power Vectors: An Application of Fourier Analysis to the Description and Statistical Analysis ofRefractive Error. *Optometry and Vision Science,* 1997, vol. 74 (6), 367-375